(19) Europäisches Patentamt
European Patent Office
Office européen des brevets

(11) **EP 4 575 562 A1**

(12) # EUROPEAN PATENT APPLICATION

(43) Date of publication:
**25.06.2025 Bulletin 2025/26**

(51) International Patent Classification (IPC):
**G01S 7/481** (2006.01)   **G01S 17/42** (2006.01)
**G01S 17/89** (2020.01)   **G01S 7/497** (2006.01)

(21) Application number: **23219446.4**

(22) Date of filing: **21.12.2023**

(52) Cooperative Patent Classification (CPC):
**G01S 17/89; G01S 7/4817; G01S 7/4972;
G01S 17/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LEICA GEOSYSTEMS AG
9435 Heerbrugg (CH)**

(72) Inventor: **KIRCHHOFER, Werner
9428 Walzenhausen (CH)**

(74) Representative: **Kaminski Harmann
Patentanwälte AG
Landstrasse 124
9490 Vaduz (LI)**

(54) **AERIAL SCANNING INSTRUMENT WITH ATTITUDE ADJUSTMENT**

(57)    The invention relates to a mobile scanning instrument configured to be mounted on a carrier and to acquire point cloud data representing a target area at an object distance whilst the carrier vehicle is travelling at a carrier velocity relative to the target area. The mobile scanning instrument comprises (i) a pulse source unit configured to generate scanning pulses with a pulse rate, and (ii) a beam deflection element configured to define an actual transmission direction of the generated scanning pulses, wherein the actual transmission direction varies along a scan pattern with a scan rate. The scanning instrument is configured to offset the scan pattern with a twist angle representing a rotation about a main axis and to optimize the twist angle based on an optimization target representing a point density and/or a homogeneity of the point cloud data.

Fig. 5a

**(Cont. next page)**

EP 4 575 562 A1

Fig. 5b

**Description**

FIELD OF THE INVENTION

The present invention relates to a structure and operation of a mobile scanning instrument configured to acquire a point cloud data representing a target area. The mobile scanning instrument is configured to be mounted to a carrier vehicle, in particular an aerial vehicle, an acquire the point cloud, while the carrier vehicle is travelling with a carrier velocity.

BACKGROUND OF THE INVENTION

To capture two- or three-dimensional or information on target area, in particular an urban or agricultural area, scanning methods are typically utilized. Ideally a homogenous, dense point cloud is provided. Generic scanning instruments scan the setting with a scanning beam, in particular a laser-beam, and determine the distance of object points based e.g. on time-of-flight measurement. The point cloud representing the setting is generated by combining the measured distance information with an emission angle of the scanning beam. The capturing of the point cloud might also be carried out during a spatial movement of the measuring apparatus. The own movement of the measuring apparatus, respectively the movement of a mobile carrier, has to be acquired and merged with the scan data. Especially for aerial scanning the fast movement of the carrier as well as the relatively long time-of-flight of the scanning pulses might limit the achievable quality of the point cloud. While the applicability of the present invention is not limited to the field of aerial scanning, many aspects of the invention will be illustrated by examples from aerial scanning. The specific features of other mobile scanning methods, e.g. car or rail based profiling, can be applied accordingly.

Aerial scanning is typically performed with instruments whose beam deflection element generates the scanning pattern by a rotating, e.g., a rotating prism, or an oscillating type of mode of beam deflection with respect to a main axis of the scanning instrument, the main axis defines a reference system. While for some embodiments the main axis corresponds to a physical rotation and/or a specific optical axis of the survey instruments an imaginary axis can also act as the main axis. The main axis is typically aligned to the Nadir ("straight down") direction, while the rotation or swinging movement provides a scanning field of view in the range of 20-90°, more particularly 40-60°. Said scanning is performed by a mechanical element, i.e. scan rates above 150.000 rotation per minute or 250 Hz are currently not practicable.

The scanning instruments generates scan pulses in a periodic manner and transmits them with a pulse rate. For aerial scanning periodic manner is understood in a broad sense, i.e. the generation of the pulse might involve a periodic or pseudorandom modulation, or even a combination of both, e.g. as disclosed in EP 4 148 458 A1. Since the pulse generation is provided by purely electronic components, the practical limit of the pulse rate is set by the detection and assignment of the return pulses.

In the following the relevant resolutions in a generic high-resolution survey task will be illustrated by a simplified example. By way of example the scanning instrument provides a line pattern scanned unidirectionally along a circle with a scan rate of 200 Hz, a pulse rate of 2 MHz. The aircraft, as carrier vehicle is, travelling with 100 ms$^{-1}$ flight speed, i.e. the magnitude of the carrier velocity, and the flight height, which near the nadir corresponds to the object distance, is 500 m.

The line-to-line distance ($d_{L2L}$), or the distance between two scan lines, depends solely on the carrier velocity (v) and the scan rate ($f_s$):

$$d_{L2L} = \frac{v}{f_s} = \frac{100\ ms^{-1}}{200\ Hz} = 0.5\ m$$

The point-to-point distance ($d_{P2P}$) depends on pulse rate ($f_p$) and the scan rate ($f_s$) and the object distance (h), under the above conditions it can be estimated as

$$d_{P2P} \approx \frac{2\pi f_s}{f_r} h = \frac{6.283 \cdot 200\ Hz}{2\ MHz} 500\ m \approx 0.3\ m$$

The achievable point-to-point distance ($d_{P2P}$) is inversely proportional to the object distance (h). The line-to-line distance ($d_{L2L}$) however does not depend on the object distance. This means that the maximum resolution, in particular the maximum homogeneous resolution, is limited by the achievable line-to-line distance. The achievable line-to-line distance is however dependent on the carrier velocity, which is e.g. limited by the stall speed of fixed wing aircraft, and the scan rate. Moreover without improving the line-to-line distance ($d_{L2L}$) the surveyor cannot exploit the capabilities of improved electronics or higher performance aircraft.

Systems allowing higher flexibility in providing an effective line-to-line density are desirable. Among others such systems would profit from the development of faster laser sources / detectors as they would enable higher pulse rates.

OBJECT OF THE INVENTION

In view of the above circumstances, an object of the present invention is to provide more flexibility in designing a survey job by a mobile scanning instrument.

A particular object is to optimize the homogeneity and/or the point density of the point cloud data and/or the scan expense.

Another objective of the present invention is to expand the operational envelope of the survey systems, particularly for survey aircrafts by enabling higher flight speeds while maintaining the point spacing.

Another objective of the present invention is to reduce the required number of survey runs over the same target area, thereby reducing environmental burdens.

These objectives are at least partly achieved by realizing the characterizing features of the independent claims. Features, which further develop the invention in an alternative or advantageous manner are described in the dependent patent claims.

SUMMARY OF THE INVENTION

The present invention relates to a mobile scanning instrument configured to be mounted on a carrier vehicle and configured to acquire point cloud data representing a target area. The target area is located at an object distance from the mobile scanning instrument whilst the carrier vehicle is travelling at a carrier velocity relative to the target area.

From here on, unless otherwise specified, a mobile scanning instrument is understood to comprise elements configured to provide said mounting to the carrier vehicle. The mounting elements might provide an adjustable, in particular adjustable in a motorized fashion within a scanning task or in between two scanning task, orientation of the mobile scanning instrument with respect to the orientation of the carrier vehicle and/or the carrier velocity. The reference system of the mobile scanning instrument comprises a main axis of the scanning instrument. The main axis represents a direction of view.

The mobile scanning instrument comprises a pulse source unit configured to generate scanning pulses in a periodic manner having a pulse rate. Periodic in the sense of invention also comprises modulated sequences. The mobile scanning instrument also comprises a beam deflection element configured to define an actual transmission direction of the generated scanning pulses with respect to the main axis, wherein the actual transmission direction varies along a scan pattern in a periodic manner having a scan rate. Scan pattern in the sense of the invention corresponds to the above variation of the transmission direction. The point patterns actually generated on the target are a result of the interplay of the scan pattern, the actual generation of the pulses according to the specific pulse sequence and the target topography. By way of example, for many of the embodiments described, it is assumed that the pulse generation and beam deflection are strictly periodic. It is clear to those skilled in the art that this is merely for the sake of transparency and that neither the present invention nor the disclosed embodiments, unless expressly mentioned, are limited to such cases. The specific features of e.g. modulated pulse shall be applied accordingly.

By way of example the ensemble of the pulse source and the beam deflection element will also be referred to as transmission unit. For many of the disclosed embodiments the beam deflection element also interacts with the reflected scanning beam. The claimed invention is, in principle, applicable with any detection arrangement including both embodiments wherein the beam deflection element interacts with the reflected beam and embodiments comprising a partly or fully separated detector beam path.

The mobile scanning instrument exhibits a main axis. In a general sense the main axis defines an instrument intern reference system. Moreover, the carrier velocity and the main axis define a moving external reference system. The main axis might correspond to a section of a beam path, in particular a section representing the beam entering a beam deflection element, and/or an imaginary beam path corresponding to an undeflected outgoing beam, and/or a time average of the actual transmission direction, and/or an average of the transmission directions of the transmitted pulses. The skilled person understands that many elements of the above list, referring to some praxis-relevant choice for the main axis, coincide for generic scanning instruments.

The scanning instrument is configured to offset the scan pattern with a twist angle representing a rotation about the main axis. Alternatively, if the carrier velocity is known, the orientation of the scan pattern is settable with respect to carrier velocity. The offsetting might be provided by a mechanical component rotating the beam deflection element / transmission element about the main axis. Alternatively, the offsetting is provided by changing an operational mode / operational parameter of the beam deflection element.

The scanning instrument is configured to perform a twist angle optimization algorithm. The twist angle optimization algorithm comprises (i) accessing input parameters comprising the pulse rate, the scan rate, the carrier velocity, and the object distance, (ii) providing an optimization target representing a point density and/or a homogeneity of the point cloud data, and (iii) providing an output twist angle based on the optimization target and the input parameters. It is self-explanatory for the skilled artisan that the utilization of numerals and letters does not represent e.g. a sequence of performing the steps. These and all further numbers do not represent a temporal and spatial connection, not even in the form of a preferred sequence, and merely serve the purpose of readability. Said actions might be performed in any reasonable way, in particular as continuous adjustment.

Owing to the twisting, at least in a middle portion of the swath, an effective line-to-line distance ($d_{L2L,eff}$), i.e. a distance in a direction perpendicular to the scan direction, will be $d_{L2L,eff}=d_{L2L}\cdot\cos(\alpha)$, wherein $\alpha$ is the angle between the scan direction and the carrier velocity and $d_{L2L}$ is the line-to-line distance measured in the direction of the carrier velocity. In other words, the twisting enables an overcoming of the limits of the velocity of the mechanical elements.

The optimization target might comprise preferred intervals, e.g. "a field of view 25-40°" and/or "a swath width 150-250 meters", maximization targets, minimization targets or threshold levels, e.g. "maximize the point density" and/or "at least 5 points per m$^2$", a constraint regarding the scan or pulse rates, or forcing relationship between different parameters and/or navigational targets, e.g. "homogeneous point density" and/or "scanning direction perpendicular to carrier velocity". The skilled person could provide many sensible combinations and alternatives based on the above non-exhaustive list.

In some specific embodiments, the mobile scanning instrument is configured to be mounted to an aircraft. The carrier velocity is a flight velocity with respect to the ground. In some specific embodiments, the main axis corresponds to a nadir direction. In some specific embodiments the carrier is one of (i) a helicopter, (ii) a light fixed wing aircraft, having a gross take-off weight below 6000 kg, and (iii) a large UAV, having a weight over 150 kg. While not limited to the claimed invention can be beneficially combined with new, higher performance survey aircrafts..

In some embodiment, the beam deflection element comprises a first wedge and a second wedge mounted along the main axis. The first wedge is configured to rotate with a first wedge rate. The second wedge configured to rotate with a second wedge rate, such that a ratio first and the second wedge rates is a proper fraction, in particular a root of unity. Consequently, the scan rate corresponds to a largest common divisor of the first and second wedge rates.

In some specific embodiments, the wedges are designed to provide a generalized Risley prism pair, more particularly a prism pair with identical wedges configured to provide linear, circular, and rose patterns depending on the ratio of the wedge rates. Alternatively, the wedges are designed to provide a prism pair with dissimilar wedges configured to provide elliptical, circular, and rose patterns depending on the ratio of the wedge rates.

In some specific embodiments, the mobile scanning instrument is configured to provide the twist angle based on a wedge phase shift representing a phase difference between a rotation of the first wedge and a rotation of the second wedge. One advantage of the above generalized Risley prism pair is the ability to provide the twist angle without rotating the scanning instrument. I.e. the twist angle can be constantly monitored and adjusted during a scan task. Alternatively or additionally, the twist angle might be varied depending on the partial scan task, i.e. when a single scanning task involves both urban and landscape scanning and/or overview survey from high altitude and high resolution scanning of an area of interest.

In some embodiments, the mobile scanning instrument is configured to provide a twist angle interval, wherein the scanning instrument is configured to offset the scan pattern with any twist angle within said interval. In some specific embodiments the mobile scanning instrument is configured to provide any possible twist angle in the 0-360° interval in a stepless manner. Alternatively, the mobile scanning instrument might provide a set of selectable twist angles, comprising a limited number, in particular less than six, preset twist angles and means for selecting one twist angle from the set of selectable twist angles, in particular as a hardware switch or a software switch embodied as a dropdown menu.

In some embodiments, (i) the scan pattern is a line pattern, (ii) the scan rate and the carrier velocity define a line-to-line distance, (iii) the pulse rate, the scan rate and the object distance define a point-to-point distance, and (iv) the optimization target is a threshold homogeneous point density of the point cloud data. It is clear that line pattern in the sense of the invention covers both unidirectional scanning, resulting a point pattern comprising parallel lines and oscillating patterns resulting in a generalized zig-zag point patterns. In alternative embodiments the scan pattern is an elliptical pattern. The specific features corresponding to line-to-line and point-to-point distance can be defined accordingly. Particularly a linear displacement between point corresponding to the same scan phase might define an equivalent of the line-to-point distance.

In some specific embodiments, the twist angle optimization algorithm comprises (i) determining an effective line-to-line distance based on the line-to-line distance and the twist angle, (ii) providing the optimal twist angle based on the effective line-to-line distance and the point-to-point distance, in particular by selecting the twist angle setting the effective line-to-line distance equal to a maximal point-to-point distance or to point-to-point distance corresponding to a target point density. In other words, the highest homogeneous point density is either limited by the effective line-to-line distance, which might be the case for low altitude scanning or by the point-to-point distance, which might be the case for high altitude scanning. The twist angle optimization algorithm provides a twist angle for which the two coincide, thus no "empty optimization" takes place. Instead of the point-to-point distance an effective point-to-point distance, considering a resolution loss due to post processing, can be equally used. Resolution can be lost, for example, due to artifact removal or smoothing.

In some embodiments, the mobile scanning instrument comprises a task recognition functionality. The task recognition functionality is configured to (i) determine a type of the scan task, in particular by determining a representative object distance variation, and (ii) provide an assessment on the optimization target based on the determined scan task. The scanning instrument might be configured to provide an assessment regarding the scan task, whether a landscape or urban scanning is performed, whether a high- or low altitude scan is performed, whether the flight speed is high etc.. Such data can be provided by the operator; however it may equally be recognized from the point cloud data itself.

In some specific embodiments, the optimization target comprises maximizing an effective swath width for scan tasks with representative object distance variation is low, e.g., below 10 meter / 100 meter. The effective swath width is the extent of the scan pattern perpendicular to the carrier velocity.

In some specific embodiments, the optimization target comprises maximizing a homogeneous point density of the point cloud data for scan tasks with representative object distance variation above 10 meter / 100 meter. The homogeneous point density of the point cloud data might be provided by setting the effective line-to-line distance equal to a maximal point-to-point distance or a point-to-point distance corresponding to a point density target.

In some embodiments, the mobile scanning instrument is configured to acquire point cloud data with the scan rate of at least 10 Hz, in particular 50 Hz. In some specific embodiments, the mobile scanning instrument is configured to acquire point cloud data with the scan rate of at least 200 Hz.

The present invention also relates to a method of surveying by a mobile scanning instrument mounted on a carrier vehicle travelling with a carrier velocity a target area at an object distance from the mobile scanning instrument. The method comprises (i) generating scanning pulses in a periodic manner having a pulse rate, (ii) transmitting the generated scanning pulses along an actual transmission direction with respect to a main axis, wherein the actual transmission direction varies along a scan pattern in a periodic manner having a scan rate, (iii) acquiring return pulses from the target area and providing return pulse data regarding the acquired return pulses, (iv) deriving the point cloud data representing the target area based on the return pulse data, (v) performing a twist angle optimization. The twist angle optimization comprises (a) accessing input parameters comprising the pulse rate, the scan rate, the carrier velocity, and the object distance, (b) providing an optimization target representing a point density and/or a homogeneity of the point cloud data, (c) providing an output twist angle based on the optimization target and the input parameters, wherein a twist angle represents an offsetting of the scan pattern by a rotation about the main axis, and (d) setting the twist angle to the output twist angle.

In some embodiments of the method, the optimization target is a highest achievable homogeneous point density of the point cloud data. In other words, equal point spacing it desired at max collection velocity to overcome the limitations of the scan rate.

In some embodiments, the method further comprises a task recognition. The task recognition comprises (i) determining a type of the scan task, in particular by determining a representative object distance variation, and (ii) providing an assessment on the optimization target based on the determined scan task.

In some specific embodiment of the method, feedback data is provided to a training procedure. The training procedure is based on a machine learning algorithm and providing update information for the task recognition. The feedback data is provided by (i) explicit feedback by means of the feedback procedure, in particular by an operator of the mobile scanning instrument, and/or (ii) implicit feedback. The implicit feedback can be based on an interpretation of a lack of explicit feedback as a confirmation of the assignment and/or a comparison of actual point cloud data, in particular a line-to-line distance, point-to-point distance, or swath width, with the assessed optimization target.

In some embodiments of the method, (i) the surveying is an aerial scanning, (ii) the carrier velocity is a flight velocity, (iii) the main axis corresponds to a nadir direction, and (iv) the method is performed relative to a reference frame defined by the flight velocity and the nadir direction, in particular in a zero-twist state the scan pattern has a maximum extension in a direction perpendicular both to the nadir direction and the flight velocity. In other words, the zero-twist state corresponds to a swath width optimized aerial scanning, in particular a landscape scan.

In some embodiments, the method further comprises (i) providing a pulse modulation arrangement, wherein the pulse modulation arrangement comprises (a) a pseudorandom component, and/or (b) a geometry dependent component provided on the basis of the actual transmission direction, and (ii) modulating the generation of the scanning pulse based on the pulse modulation arrangement. In other words, the inventive method can be performed with modulated pulse trains. The modulated pulse train might be configured to provide an improved homogeneity of the point cloud, in particular by compensating the time-of-flight variation of the pulses in dependence of the actual transmission direction and/or by compensating the reduced ground velocity of the scan pattern at the border of the swath. The modulated pulse train might also be configured to provide an MPiA disambiguation. The modulation might also be configured to fulfill both of these and/or further requirements.

In some embodiments, the method further comprises a post-processing. The post processing comprises a step of discarding and/or smoothing a major portion of the point cloud data in order to improve homogeneity. The pulse rate is set to oversample the target area thereby allowing the post processing to be performed. In other words, point-to-point distance can deliberately set to be lower than the line-to-line distance.

In some specific embodiments, the point-to-point distance might be set to be a unit fraction of the line-to-line distance, i.e. 1:2,1:3 and a respective number of points might be discarded/smoothed. Alternatively, the pulse rate might be set to be the highest and the homogeneity is ensured by providing virtual object points as mean points derived from a plurality of measured object points.

The present invention also relates to a computer program comprising program code and stored on a machine-readable medium or embodied by an electromagnetic wave. The computer program comprises a program code segment and has computer-executable instructions for performing a twist angle optimization algorithm for a mobile scanning instrument mounted on a carrier vehicle. The mobile scanning instrument is configured to (i) generate scanning pulses in a periodic manner having a pulse rate, (ii) transmit the generated scanning pulses along an actual transmission direction with respect to a main axis, wherein the actual transmission direction varies along a scan pattern in a periodic manner having a scan rate, (iii) acquire return pulses from a target area and providing return pulse data regarding the acquired return pulses, and (iv) derive point cloud data representing the target area based on the return pulse data. The mobile scanning instrument is particularly an embodiment of the inventive mobile scanning instrument.

The twist angle optimization algorithm comprises (i) accessing input parameters comprising the pulse rate, the scan rate, a carrier velocity, and an object distance, (ii) providing an optimization target representing a point density and/or a homogeneity of the point cloud data, (iii) providing an output twist angle based on the optimization target and the input parameters, wherein a twist angle represents an offsetting of the scan pattern by a rotation a main axis.

The computer program might be realized as a part of generic driver of the mobile scanning instrument configured to control further aspects of the mobile scanning instrument. Alternatively, the computer program might also be realized as a standalone product configured substantially to for performing a twist angle optimization algorithm.

BRIEF DESCRIPTION OF THE DRAWINGS

By way of example only, specific embodiments of the invention will be described more fully hereinafter with reference to the accompanying figures, wherein:

Figure 1 depicts the schematics of an aerial scanning of target area.

Figure 2 depicts a few point patterns with respect to the main axis (a-e) and the target area (f-j).

Figure 3 depicts a schematic of a scanning instrument and a possible realization of a beam deflection element.

Figure 4 depicts schematically an offsetting of an elliptical scan pattern.

Figure 5 schematically depicts the effect of offsetting a linear scan pattern with a twist angle on the homogeneous point density and the swath width.

Figure 6a schematically depicts, by a flowchart, some key aspects of the twist angle optimization algorithm.

Figure 6b schematically depicts an algorithm for providing a homogeneous point density by adjusting the twist angle and the pulse rate.

SPECIFIC EMBODIMENTS OF THE INVENTION

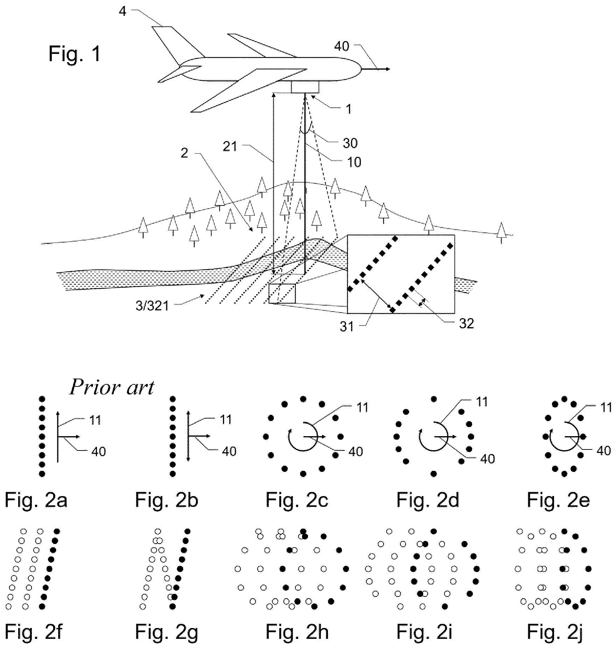

Figure 1 shows a mobile scanning instrument 1 carried by an aircraft 4 to acquire a point cloud data from a target area 2 while the aircraft 4 travels with a carrier velocity 40 relative to the target area 2. The mobile scanning instrument 1 is usually mounted together with further surveying elements and cameras facing downwards or to oblique direction. The main axis **10** of the mobile scanning instrument **1** is aligned in a known way relative to the carrier velocity **40.** In the depicted embodiment it is aligned to the nadir. The object distance **21** between the target area **2** and the scanning instrument **1** might be defined, as depicted, with respect to the main axis **10.** Alternative mountings, e.g. the main axis **10** could point obliquely to a side of forwards or backwards with respect to the carrier velocity **40** are also within the sense of the present invention.

The scanning instrument **1** is configured to provide a scan pattern **3,** depicted as a line pattern, represented by the resulting point pattern **399.** While the present invention is not limited to such line patterns, for the sake of transparency many features of present invention will be illustrated using a line pattern. The aspects of further scan patterns, in particular elliptical patterns might be applied accordingly. The key parameters of such scan patterns are a field of view **30** defining a swath width, a line-to-line distance **31** of the resulting point pattern **399,** and a point-to-point distance **32** of the resulting point pattern **399.** Throughout the description field of view **30** is defined with angular dimension, while swath width, line-to-line **31** and point-to-point distance **32** is defined with linear dimension. This serves transparency reasons only and suitable alternative conventions are also applicable. While Figure 1 is a schematic representation and not to scale, the reasonably achievable point-to-point distance **32** is generally smaller than line-to-line distance **31**.

Figure 2 depicts non-exclusive examples of point patterns. The top row (Figure 2 a-e) depicts the point pattern with respect to the main axis, i.e. as a stationary pattern. The bottom row (Figure 2 f-j) depicts the respective patterns with respect to the target area, i.e. considering the carrier velocity **40**. Full circles represent the last scanning period, while previous scan periods are marked with empty circles.

The first pair (a-f) is a line pattern scanned in a single scan direction **11**. The second pair (b-g) corresponds to a zig-zag pattern, i.e. the scan direction **11** reverses during the scanning. The third pair (c-h) is a circular pattern with strictly periodic pulse rates, i.e. the time interval between two pulse transmission is always the same. The fourth pair (d-i) is a circular scan/point pattern; however, the pulse rate is modulated to provide a uniform distance between the rows of the pulses. In the sense of the invention a pattern according to the fourth pair also possess pulses generated in a periodic manner. The fifth pair (e-j) represent an elliptical pattern.

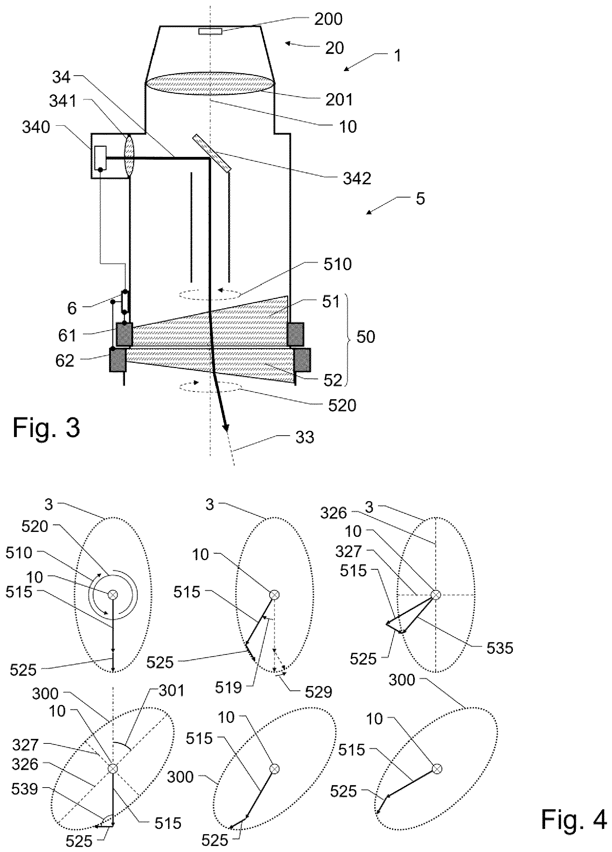

Figure 3 schematically depicts a scanning instrument **1** having a transmission unit **5** with a beam deflection element **50** comprising a first wedge **51** and a second wedge **52**. By way of example the first **51** and second wedges **52** with different geometry is shown, such beam deflection elements **50** are configured to provide an elliptical scan pattern. With two optically identical wedges, i.e. a Risley prism pair, linear scan patterns could be provided. For transparency reasons the former embodiment will be discussed in more detail. This, however, shall not be construed in a limiting manner. Specific aspects of the invention are applicable to embodiments with identical wedges. Moreover, the invention in general, is also applicable with scanning instruments **1** based on other beam deflection elements **50,** such as galvo-mirrors or polygon mirrors.

The transmission unit also comprises a pulse source **340** and focusing/collimating elements **341** as well as a mirror **342** to steer the beam towards the beam deflection element **50**. A section of the beam path **34** corresponds to the main axis **10** of the transmission unit **5** or the scanning instrument **1**. The beam deflection element **50** defines the actual transmission direction **33** of the scanning pulses. A periodic variation of actual transmission direction **33** along the scan pattern is provided by rotating **510,520** the first **51** and second wedges **52** with the respective motors **61,62**.

The scanning instrument **1** also comprises a detection unit **20,** with a sensing element **200** and appropriate focusing optics **201**. The detection unit **20** is configured to acquire return pulses from the target area (not shown). The scanning instrument comprises a computing unit **6,** the computing unit is configured to control the pulse source **340,** the motors **61,62** driving the wedges **51,52** and to access data from the detection unit (not shown).

The skilled person understands that the above schematic representation might omitted some essential features of claimed invention and/or displayed said features in simplified manner. Moreover, some of the depicted features, while advantageous, may not be strictly necessary to realize the invention. These features are not to be construed as limiting the claimed subject matter, which is defined only by the claims.

Figure 4 illustrates the concept of offsetting the scan pattern **3,300** by a twist angle **301,** corresponding to a rotation about the main axis **10**. By way of example the main axis **10** points towards the nadir. By way of example Figure 4 interpreted based on the principles of scanning instrument analogous to the one illustrated in Figure 3. As will be shown such scanning instruments are well-suited to carry out the invention as they can provide the twist angle **301** without any further mechanical components. The present invention can, nevertheless, be performed by scanning instrument based on other working principles. The invention can be applied particularly with instruments where the beam deflection element or the housing of the scanning instrument is mechanically rotated by an angle corresponding to the twist angle **301**.

The scanning instrument is configured to provide a first beam deflection angle **515** and a second beam deflection angle **525**. The net beam deflection angle **535,** is the vector sum of the first **515** and second beam deflection angles **525**.

The beam deflection angles **515,525** are rotated **510,520** by the respective first **519** and the second rate **529** in directions opposite to each other. The magnitude of the first **519** and second rates **529** are equal. This means that during one complete rotation the first **515** and second deflection angles **525** experience all orientation differences as the net deflection angle **535** scans an elliptical shaped second scan pattern **3,300**. The long axis **326** of the ellipse corresponds to a sum of the deflection angles **515,525,** while a short axis **327** corresponds to a difference of the deflection angles **515,525**.

The top row depicts a situation where the deflection angles **515,525** are in phase to each other at the first panel, while the bottom row depicts a situation where a wedge phase shift **539** is introduced between the two beam deflection angles **515,525**. The shape of the scan patterns **3,300,** characterized by the long **326** and short axes **327** are identical. The offset scan pattern **300,** is however offset by rotation with a twist angle **301** about the main axis **10**. The twist angle **301** in the depicted embodiment is the half of the wedge phase shift **539**. The offsetting of a linear scan pattern, provided by a Risley prism pair, can be performed in an analogous manner.

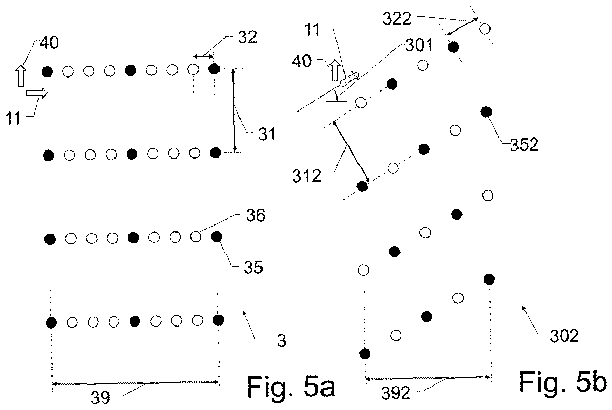

Figure 5a and 5b illustrates the effects of offsetting a linear scan pattern **3,302** by a twist angle **301** on the line-to-line distance **31** respectively the effective line-to-line distance **312,** i.e. the homogenous point density, and the swath width **39,392**. By way of example Figure 5a shows a situation, wherein the scanning is performed by a fixed wing aircraft travelling with a carrier velocity **40** and the scan direction **11** is set to be perpendicular to the carrier velocity **40**.

The point-to-point distance **32** is limited by the achievable pulse rate and the flight height, the latter can be varied depending on the task, while the former depend on the performance of electronic components. The line-to-line distance **31** depends on the scan rate and the carrier velocity **40,** the latter is constrained by aircraft type, while the former depend on the performance of mechanical components.

This means that for high resolution scanning a situation as depicted in Figure 5a, representing a zero-twist state, is often encountered. In the zero-twist state the scan pattern **3** has a maximum extension a direction perpendicular both to the nadir direction and the direction of the carrier velocity **40.** The object points **35** of the homogeneous point cloud are represented by the filled circles. Their density is limited by the achievable line-to-line distance **31.** The empty circles relate to further object points **36,** which are typically measured for an improved filtering of the point cloud, however, do not contribute to the resolution. In other words, the pulse rate is set to oversample the target area, which allows a post processing to be performed. The point-to-point distance **32** is typically set to correlate with the line-to-line distance **31.**

In Figure 5b the scan direction **11** is offset by the twist angle **301.** The effective line-to-line distance **312** in the twisted pattern **302** is reduced by a cosine of the twist angle **301.** This allows an increased density for the object points **352** of the homogeneous point cloud. The price to be paid is the reduction of the swath width **392** by the cosine to the square of the twist angle **301.** However, this is often an acceptable compromise, especially for urban survey, because the advantages of a large swath width **392** cannot be exploited due to the shadow effects of the buildings. The effective point-to-point distance **322** is set to correlate with the effective line-to-line distance **312.**

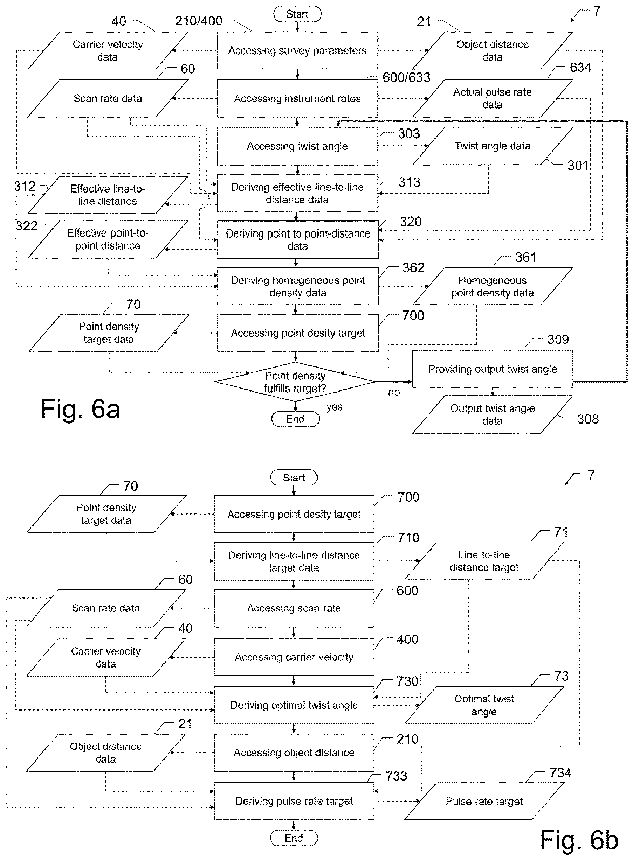

Figure 6a schematically depicts, by a flowchart, a first exemplary embodiment of the twist angle optimization algorithm **7.** Command/flow-lines show as bold and data-lines as dashed arrows. The skilled person understands that the depicted flowcharts focus on the features of the claimed invention and the actual embodiments comprise further, non-depicted elements, in particular command or data elements and/or data transfer lines. Moreover, command or data modules might be depicted in a simplified form due to reasons of clarity and conciseness.

In the depicted embodiment accessing the input data is realized in two steps. First the survey parameters, including the object distance data **21** and the carrier velocity data **40** is accessed **210/400.** Further survey parameters, in particular an expected variation of the object distance **21,** might also be accessed. This is followed by accessing **600/633** the instrument rates, i.e. the scan rate **60** and the actual pulse rate **634.** Finally, the twist angle **301,** in particular the orientation of the scan pattern with respect to the carrier velocity **40,** is accessed **303.** From the above parameters the effective line-to-line **312** and effective point-to-point distances **322** are derived **313/320.** The achievable homogeneous point density data **361** is derived **362** based on the effective line-to-line **312** and point-to-point distances **322.** The homogeneous point density **361** is then compared with a point density target data **70** provided **700** e.g. by a manual input or as a scan task related target. If the homogeneous point density **361** does not correspond to the point density target **70** an output twist angle data **308,** i.e. commands for adjusting the twist angle **301,** is provided **309.** It is clear for the skilled person that the depicted twist angle optimization algorithm **7** is effectively applicable if the homogeneous point density **361** is limited by the effective line-to-line distance **312.**

Figure 6b schematically depicts, by a flowchart, a second exemplary embodiment of the twist angle optimization algorithm **7.** In this embodiment the goal is to provide a point cloud according to point density target **70.** First the point density target **70** is accessed **700.** A line-to-line distance target **71** is derived **710** based on the point density target **70.** The system accesses **400,600** the carrier velocity **40** and the scan rate **60.** The optimal twist angle **73** is then derived **730** which provides the required line-to-line distance **71.** Finally the pulse rate target **734** is provided **733** based on the line-to-line density target **71,** the accessed **210** object distance **21** and the scan rate **60.** The pulse rate target **734** might be provided such that it oversamples the target, i.e. the pulse-to-pulse distance is a unit fraction of the line-to-line distance target **71.**

Although the invention is illustrated above, partly with reference to some specific embodiments, it must be understood that numerous modifications and combinations of different features of the embodiments can be made. All of these modifications lie within the scope of the appended claims.

**Claims**

1.  Mobile scanning instrument (1) configured to be mounted on a carrier vehicle (4), and configured to acquire point cloud data representing a target area (2) at an object distance (21) from the mobile scanning instrument (1) whilst the carrier vehicle (4) is travelling at a carrier velocity (40) relative to the target area (2),

    wherein the mobile scanning instrument (1) exhibits a main axis (10) and comprises

    - a pulse source unit (340) configured to generate scanning pulses in a periodic manner having a pulse rate (634), and
    - a beam deflection element (50) configured to define an actual transmission direction (33) of the generated scanning pulses with respect to the main axis (10), wherein the actual transmission direction (33) varies along a scan pattern (3,300,302) in a periodic manner having a scan rate (60),

**characterized in that**

the scanning instrument (1) is configured

- to offset the scan pattern (3,300,302) with a twist angle (301) representing a rotation about the main axis (10), and
- to perform a twist angle optimization algorithm (7) comprising

  ∘ accessing (210,400,600,633) input parameters comprising the pulse rate (634), the scan rate (60), the carrier velocity (40), and the object distance (21),
  ∘ providing an optimization target representing a point density and/or a homogeneity of the point cloud data,
  ∘ providing (309) an output twist angle (308) based on the optimization target and the input parameters.

2. The mobile scanning instrument (1) according to claim 1 configured to be mounted to an aircraft, wherein the carrier velocity (40) is a flight velocity over the ground, in particular wherein the main axis (10) corresponds to a nadir direction.

3. The mobile scanning instrument (1) according to any one of claims 1 to 2, wherein

   - the scan pattern (3,300,302) is a line pattern,
   - the scan rate (60) and the carrier velocity (40) define a line-to-line distance (31),
   - the pulse rate (634), the scan rate (60), and the object distance (21) define a point-to-point distance (32), and
   - the optimization target is a threshold homogeneous point density of the point cloud data.

4. The mobile scanning instrument (1) according to claim 3. wherein the twist angle optimization algorithm (7) comprises

   - determining (313) an effective line-to-line distance (312) based on the line-to-line distance (31) and the twist angle (301),
   - providing (730) the optimal twist angle (73) based on the effective line-to-line distance (312) and the point-to-point distance (32), in particular by selecting the twist angle setting the effective line-to-line distance (312) equal to a maximal point-to-point distance (32) or to a point-to-point distance (32) corresponding a point density target (70).

5. The mobile scanning instrument (1) according to any one of the preceding claims, wherein

   - the beam deflection element (50) comprises a first wedge (51) and a second wedge (52) mounted along the main axis (10),
   - the first wedge (51) is configured to rotate with a first wedge rate (519),
   - the second wedge (52) configured to rotate with a second wedge rate (529), such that a ratio first (519) and the second wedge rates (529) is a proper fraction, in particular a root of unity.

6. The mobile scanning instrument (1) according to claim 5, being configured to provide the twist angle (301) based on a wedge phase shift (539) representing a phase difference between a rotation of the first wedge (51) and a rotation of the second wedge (52).

7. The mobile scanning instrument (1) according to any one of the preceding claims being configured to provide a twist angle interval, wherein the scanning instrument (1) is configured to offset the scan pattern (3,300,302) with any twist angle (301) within the twist angle interval.

8. The mobile scanning instrument (1) according to any one of the preceding claims, being configured to acquire point cloud data with the scan rate (60) of at least 10 Hz.

9. A method of surveying by a mobile scanning instrument (1) mounted on a carrier vehicle (4) travelling with a carrier velocity (40) a target area (2) at an object distance (21) from the mobile scanning instrument (1), the method comprising

   - generating scanning pulses in a periodic manner having a pulse rate (634),
   - transmitting the generated scanning pulses along an actual transmission direction (33) with respect to a main axis (10), wherein the actual transmission direction (33) varies along a scan pattern (3,300,302) in a periodic manner having a scan rate (60),
- acquiring return pulses from the target area (2) and providing return pulse data regarding the acquired return pulses,
- deriving the point cloud data representing the target area (2) based on the return pulse data

**characterized in that**
the method further comprises performing a twist angle optimization (7), wherein the twist angle optimization (7) comprises

- accessing (210,400,600,633) input parameters comprising the pulse rate (634), the scan rate (60), the carrier velocity (40), and the object distance (21);
- providing an optimization target representing a point density and/or a homogeneity of the point cloud data,
- providing (309) an output twist angle (308) based on the optimization target and the input parameters, wherein a twist angle represents an offsetting of the scan pattern (3,300,302) by a rotation about the main axis (10),
- setting the twist angle (301) to the output twist angle (308).

10. The method according to claim 9, wherein the optimization target is a highest achievable homogeneous point density (361) of the point cloud data.

11. The method according to claim 9, wherein the method further comprises a task recognition, the task recognition comprises

- determining a type of the scan task, in particular by determining a representative object distance variation,
- providing an assessment on the optimization target based on the determined scan task,

in particular, wherein feedback data is provided to a training procedure, the training procedure being based on a machine learning algorithm and providing update information for the task recognition, wherein the feedback data being provided by

- explicit feedback by means of the feedback procedure, in particular by an operator of the mobile scanning instrument (1), and/or
- implicit feedback, in particular based on at least one of

  ○ an interpretation of a lack of explicit feedback as a confirmation of the assignment,
  ○ a comparison of actual point cloud data, in particular a line-to-line distance (31), point-to-point distance (32), or swath width (39,392), with the assessed optimization target.

12. The method according to any one of claims 9 to 11, wherein

- the surveying is an aerial scanning,
- the carrier velocity (40) is a flight velocity,
- the main axis (10) corresponds to a nadir direction, and
- the method is performed relative to a reference frame defined by the flight velocity and the nadir direction, in particular in a zero twist state the scan pattern (3,300,302) has a maximum extension in a direction perpendicular both to the nadir direction and the flight velocity.

13. The method according to any one of claims 9 to 12, wherein the method further comprises

- providing a pulse modulation arrangement, wherein the pulse modulation arrangement comprises

  ○ a pseudorandom component, and/or
  ○ a geometry dependent component provided on the basis of the actual transmission direction (33),

- modulating the generation of the scanning pulse based on the pulse modulation arrangement.

14. The method according to any one of claim 9 to 13, further comprising a post-processing, wherein

- the post processing comprises a step of discarding and/or smoothing a major portion of the point cloud data in order to improve homogeneity,
- the pulse rate (634) is set to oversample the target area (2) thereby allowing the post processing to be performed.

15. A computer program comprising program code which is stored on a machine-readable medium, or being embodied by an electromagnetic wave comprising a program code segment, and has computer-executable instructions for performing a twist angle optimization algorithm (7) for a mobile scanning instrument (1) mounted on a carrier vehicle (4),

wherein the mobile scanning instrument (1) is configured to

- generate scanning pulses in a periodic manner having a pulse rate (634),
- transmit the generated scanning pulses along an actual transmission direction (33) with respect to a main axis (10), wherein the actual transmission direction (33) varies along a scan pattern (3,300,302) in a periodic manner having a scan rate (60),
- acquire return pulses from a target area (2) and provide return pulse data regarding the acquired return pulses,
- derive point cloud data representing the target area (2) based on the return pulse data; and

wherein the twist angle optimization algorithm (7) comprises

- accessing (210,400,600,633) input parameters comprising the pulse rate (634), the scan rate (60), a carrier velocity (40), and an object distance (21);
- providing an optimization target representing a point density and/or a homogeneity of the point cloud data,
- providing (309) an output twist angle (308) based on the optimization target and the input parameters, wherein a twist angle (301) represents an offsetting of the scan pattern (3,300,302) by a rotation about the main axis (10).

Fig. 1

4

40

1

21    30

2    10

3/321

31    32

*Prior art*

11    11    11    11    11

40    40    40    40    40

Fig. 2a    Fig. 2b    Fig. 2c    Fig. 2d    Fig. 2e

Fig. 2f    Fig. 2g    Fig. 2h    Fig. 2i    Fig. 2j

Fig. 3

Fig. 4

Fig. 5a

Fig. 5b

## Fig. 6a

```
                                    ( Start )
   40                  210/400         |
  ┌─────────────┐   ┌──────────────────────────┐        21           ┌──────────────┐     7
 / Carrier velocity /◄╌╌│  Accessing survey parameters │       ┌─────────────┐  / Object distance /
/    data        /     └──────────────────────────┘      / Object distance /  /    data       /
└─────────────┘  60              |                       /    data        /  └──────────────┘
  ┌─────────────┐   ┌──────────────────────────┐  600/633 └─────────────┘           634
 / Scan rate data /◄╌╌│  Accessing instrument rates │                      ┌──────────────┐
/             /       └──────────────────────────┘                      / Actual pulse rate /
└─────────────┘              |                                         /    data       /
                   ┌──────────────────────────┐  303      ┌──────────────┐└──────────────┘
                   │   Accessing twist angle   │         / Twist angle data /
                   └──────────────────────────┘         /             /  301
  312                         |                          └──────────────┘
 ┌─────────────┐   ┌──────────────────────────┐  313                 301
/ Effective line-to- /◄╌╌│ Deriving effective line-to-line │
/ line distance  /     │     distance data       │
└─────────────┘       └──────────────────────────┘
  322                         |
 ┌─────────────┐   ┌──────────────────────────┐  320
/ Effective point-to- /◄╌╌│ Deriving point to point-distance │
/ point distance /     │         data           │
└─────────────┘       └──────────────────────────┘
                              |
                   ┌──────────────────────────┐  362    ┌──────────────┐  361
                   │ Deriving homogeneous point │      / Homogeneous   /
                   │     density data          │      / point density data /
  70               └──────────────────────────┘      └──────────────┘
 ┌─────────────┐              |
/ Point density /   ┌──────────────────────────┐  700               309
/ target data  /◄╌╌│  Accessing point desity target │      ┌──────────────────────┐
└─────────────┘     └──────────────────────────┘       │ Providing output twist angle │
                              |                         └──────────────────────┘
                        ◇ Point density ◇  ╌╌╌╌╌╌╌╌╌╌╌╌╌╌╌╌╌╌╌╌╌╌╌│
                        ◇ fulfills target? ◇────no──►            |
                              |  yes                   ┌──────────────┐
                           ( End )                    / Output twist angle /
                                                      /    data       /  308
                                                      └──────────────┘
```

## Fig. 6b

```
                                    ( Start )
   70                                  |
 ┌─────────────┐   ┌──────────────────────────┐  700
/ Point density /◄╌╌│  Accessing point desity target │
/ target data  /     └──────────────────────────┘
└─────────────┘              |
                   ┌──────────────────────────┐  710    ┌──────────────┐  71
                   │ Deriving line-to-line distance │   / Line-to-line  /
                   │     target data           │       / distance target /
   60              └──────────────────────────┘       └──────────────┘
 ┌─────────────┐              |
/ Scan rate data /◄╌╌│ ┌──────────────────────────┐  600
/             /     │  Accessing scan rate       │
└─────────────┘  40 └──────────────────────────┘
 ┌─────────────┐              |
/ Carrier velocity /◄╌╌│ ┌──────────────────────────┐  400
/    data       /   │  Accessing carrier velocity  │
└─────────────┘     └──────────────────────────┘
                              |
                   ┌──────────────────────────┐  730    ┌──────────────┐  73
                   │ Deriving optimal twist angle │     / Optimal twist  /
                   └──────────────────────────┘       / angle         /
   21                         |                        └──────────────┘
 ┌─────────────┐   ┌──────────────────────────┐  210
/ Object distance /◄╌╌│  Accessing object distance │
/    data       /     └──────────────────────────┘
└─────────────┘              |
                   ┌──────────────────────────┐  733    ┌──────────────┐  734
                   │  Deriving pulse rate target │      / Pulse rate target /
                   └──────────────────────────┘       └──────────────┘
                              |
                           ( End )
```

16

Europäisches
Patentamt
European
Patent Office
Office européen
des brevets

# EUROPEAN SEARCH REPORT

**Application Number**

EP 23 21 9446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 825 722 A1 (RIEGL LASER MEASUREMENT SYSTEMS GMBH [AT]) 26 May 2021 (2021-05-26) * paragraphs [0004], [0015] - [0017], [0025] - [0038]; figures 1-8 * | 1-15 | INV. G01S7/481 G01S17/42 G01S17/89 G01S7/497 |
| A | EP 4 148 458 A1 (LEICA GEOSYSTEMS AG [CH]; LEICA GEOSYSTEMS INC [US]) 15 March 2023 (2023-03-15) * paragraphs [0030] - [0047] * | 1-15 | |
| A | EP 4 012 441 A1 (RIEGL LASER MEASUREMENT SYSTEMS GMBH [AT]) 15 June 2022 (2022-06-15) * paragraphs [0018] - [0019], [0024], [0030] - [0035] * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 16 May 2024 | Beer, Mark |

EPO FORM 1503 03.82 (P04C01)

## ANNEX TO THE EUROPEAN SEARCH REPORT
## ON EUROPEAN PATENT APPLICATION NO.

EP 23 21 9446

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | | Publication date | Patent family member(s) | | Publication date |
|---|---|---|---|---|---|
| EP 3825722 | A1 | 26-05-2021 | NONE | | |
| EP 4148458 | A1 | 15-03-2023 | CN | 115792934 A | 14-03-2023 |
| | | | EP | 4148458 A1 | 15-03-2023 |
| | | | US | 2023078949 A1 | 16-03-2023 |
| EP 4012441 | A1 | 15-06-2022 | AU | 2021398449 A1 | 22-06-2023 |
| | | | CA | 3199491 A1 | 16-06-2022 |
| | | | CN | 116710802 A | 05-09-2023 |
| | | | EP | 4012441 A1 | 15-06-2022 |
| | | | US | 2024094347 A1 | 21-03-2024 |
| | | | WO | 2022122732 A1 | 16-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4148458 A1